# EUROPÄISCHE PATENTSCHRIFT

(11) **EP 2 227 507 B1**
(45) Veröffentlichungstag und Bekanntmachung des Hinweises auf die Patenterteilung: **31.08.2011**
(21) Anmeldenummer: 08861838.4
(22) Anmeldetag: 15.12.2008
(51) Int. Cl.: C08L 77/00

(54) **THERMOPLASTISCHE POLYAMIDE MIT POLYETHERAMINEN**
THERMOPLASTIC POLYAMIDES HAVING POLYETHER AMINES
POLYAMIDES THERMOPLASTIQUES COMPRENANT DES POLYÉTHERAMINES

(30) Priorität: 18.12.2007 EP 07123450
(43) Veröffentlichungstag der Anmeldung: 15.09.2010
(73) Patentinhaber: BASF SE, 67056 Ludwigshafen (DE)
(72) Erfinder: JAIN, Sachin, 68165 Mannheim (DE); DESBOIS, Philippe, 68535 Edingen-Neckarhausen (DE); GABRIEL, Claus, 64347 Griesheim (DE); WEBER, Martin, 67487 Maikammer (DE); EIBECK, Peter, 67346 Speyer (DE); BRUCHMANN, Bernd, 67251 Freinsheim (DE); KLATT, Martin, 68165 Mannheim (DE)
(86) Internationale Anmeldenummer: PCT/EP2008/067519
(87) Internationale Veröffentlichungsnummer: WO 2009/077492

(56) Entgegenhaltungen:
- EP-A1- 1 845 136
- WO-A1-2009/050094
- DE-A1- 19 963 188
- US-A1- 2007 060 719

## Beschreibung

Die Erfindung betrifft thermoplastische Formmassen, enthaltend
A) 10 bis 99 Gew.-% mindestens eines thermoplastischen Polyamides
B) 0,01 bis 30 Gew.-% mindestens eines hoch- oder hyperverzweigten Polyetheramins,
C) 0 bis 70 Gew.-% weiterer Zusatzstoffe,
wobei die Summe der Gewichtsprozente der Komponenten A) bis C) 100 % ergibt.

Weiterhin betrifft die Erfindung die Verwendung von hoch- oder hyperverzweigten Polyetheraminen zur Verbesserung der Fließfähigkeit und/oder Wärmestabilität von Polyamiden, die Verwendung der thermoplastischen Formmassen zur Herstellung von Fasern, Folien und Formkörpern jeglicher Art sowie die hierbei erhältlichen Fasern, Folien und Formkörper.

Polyetheramin(-polyole) werden üblicherweise aus Trialkanolaminen, z.B. Triethanolamin, Tripropanolamin, Triisopropanolamin, gegebenenfalls in Mischung mit Monooder Dialkanolaminen erhalten, indem diese Monomere unter Katalyse, z.B. saurer oder basischer Katalyse, unter Wassereliminierung verethert werden. Die Herstellung dieser Polymere ist z.B. beschrieben in US 2,178,173, US 2,290,415, US 2,407,895 und DE 40 03 243. Die Polymerisation kann entweder statistisch erfolgen oder es können Blockstrukturen aus einzelnen Alkanolaminen hergestellt werden, die in einer weiteren Reaktion miteinander verknüpft werden (siehe dazu auch US 4,404,362).

Die in der o.g. Literatur beschriebenen Polyetheramin(-polyole) werden in freier oder quaternisierter Form z.B. eingesetzt als Emulgatoren für Öl/Wasser-Gemische, als Nachbehandlungsmittel für gefärbte Leder (DE 41 04 834) oder als Schmiermittel für die Metallverarbeitung (CS 265 929).

Für die Fließverbesserung von thermoplastischen Polyestern und Polycarbonaten werden im allgemeinen Schmiermittel zugesetzt (siehe Gächter, Müller: Kunststoffadditive, 3. Ausgabe S. 479, 486-488, Carl Hanser Verlag 1989). Nachteile hierbei sind insbesondere das Ausblühen der Additive bei der Verarbeitung.

Aus der WO 97/45474 sowie EP-A 14 24 360 und WO 2006/42705 sind dendritische Polymere und Dendrimere als Zusatz zur Verbesserung der Fließfähigkeit von Thermoplasten bekannt. Nachteilig hierbei sind eine sehr verringerte Wirksamkeit, in Abhängigkeit vom Matrixpolymeren und/oder bei hochmolekularen Thermoplasten.

Aufgabe der vorliegenden Erfindung war es daher, die Fließfähigkeit und/oder Wärmestabilität von Polyamidformmassen zu erhöhen, wobei die Abnahme des Molekulargewichtes möglichst gering sein soll. Ferner sollte das Additiv in möglichst geringen Mengen in der Matrix vorliegen. Die Mechanik der Formmassen soll möglichst erhalten bleiben und bei der Verarbeitung das Additiv nicht ausblühen.

Dementsprechend wurden die eingangs genannten thermoplastischen Formmassen, deren Verwendung, und die aus ihnen erhältlichen Formkörper, Folien und Fasern gefunden. Bevorzugte Ausführungsformen der Erfindung sind den Unteransprüchen zu entnehmen.

Hinweis zu den weiter unten gemachten Mengenangaben: bei der thermoplastischen Formmasse werden die Mengen der Komponenten A) bis C) innerhalb der genannten Bereiche derart gewählt, dass sich die Summe der Komponenten A) und B) sowie ggf. C) zu 100 Gew.-% ergänzt; Komponente C) ist fakultativ.

Als Komponente A) enthalten die erfindungsgemäßen Formmassen 10 bis 99, bevorzugt 20 bis 99 und insbesondere 30 bis 98 Gew.-% mindestens eines thermoplastischen Polyamids A).

Die Polyamide der erfindungsgemäßen Formmassen weisen im allgemeinen eine Viskositätszahl von 70 bis 350, vorzugsweise 70 bis 200 ml/g auf, bestimmt in einer 0,5 gew.-%igen Lösung in 96 gew.-%iger Schwefelsäure bei 25°C gemäß ISO 307.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin, Di-(4-aminophenyl)methan, Di-(4-aminocyclohexyl)-methan, 2,2-Di- (4-aminophenyl)-propan, 2,2-Di-(4-aminocyclohexyl)-propan oder 1,5-Diamino-2-methyl-pentan.

Bevorzugte Polyamide sind Polyhexamethylenadipinsäureamid, Polyhexamethylensebacinsäureamid und Polycaprolactam sowie Copolyamide 6/66, insbesondere mit einem Anteil von 5 bis 95 Gew.-% an Caprolactam-Einheiten.

Weiterhin geeignete Polyamide sind erhältlich aus ω-Aminoalkylnitrilen wie beispielsweise Aminocapronitril (PA 6) und Adipodinitril mit Hexamethylendiamin (PA 66) durch sog. Direktpolymerisation in Anwesenheit von Wasser, wie beispielsweise in der DE-A 10313681, EP-A 1198491 und EP 922065 beschrieben.

Außerdem seien auch noch Polyamide erwähnt, die z.B. durch Kondensation von 1,4-Diaminobutan mit Adipinsäure unter erhöhter Temperatur erhältlich sind (Polyamid 4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist.

Weiterhin haben sich solche teilaromatischen Copolyamide wie PA 6/6T und PA 66/6T als besonders vorteilhaft erwiesen, insbesondere solche, deren Triamingehalt weniger als 0,5, vorzugsweise weniger als 0,3 Gew.-% beträgt (siehe EP-A 299 444).

Die Herstellung der bevorzugten teilaromatischen Copolyamide mit niedrigem Triamingehalt kann nach den in den EP-A 129 195 und 129 196 beschriebenen Verfahren erfolgen.

Die bevorzugten teilaromatischen Copolyamide A) enthalten als Komponente a₁) 40 bis 90 Gew.-% Einheiten, die sich von Terephthalsäure und Hexamethylendiamin ableiten. Ein geringer Anteil der Terephthalsäure, vorzugsweise nicht mehr als 10 Gew.-% der gesamten eingesetzten aromatischen Dicarbonsäuren können durch Isophthalsäure oder andere aromatische Dicarbonsäuren, vorzugsweise solche, in denen die Carboxylgruppen in para-Stellung stehen, ersetzt werden.

Neben den Einheiten, die sich von Terephthalsäure und Hexamethylendiamin ableiten, enthalten die teilaromatischen Copolyamide Einheiten, die sich von ε-Caprolactam ableiten (a₂) und/oder Einheiten, die sich von Adipinsäure und Hexamethylendiamin (a3) ableiten.

Der Anteil an Einheiten, die sich von ε-Caprolactam ableiten, beträgt maximal 50 Gew.-%, vorzugsweise 20 bis 50 Gew.-%, insbesondere 25 von 40 Gew.-%, während der Anteil an Einheiten, die sich von Adipinsäure und Hexamethylendiamin ableiten, bis zu 60 Gew.-%, vorzugsweise 30 bis 60 Gew.-% und insbesondere 35 bis 55 Gew.-% beträgt.

Die Copolyamide können auch sowohl Einheiten von ε-Caprolactam als auch Einheiten von Adipinsäure und Hexamethylendiamin enthalten; in diesem Fall ist darauf zu achten, dass der Anteil an Einheiten, die frei von aromatischen Gruppen sind, mindestens 10 Gew.-% beträgt, vorzugsweise mindestens 20 Gew.-%. Das Verhältnis der Einheiten, die sich von ε-Caprolactam und von Adipinsäure und Hexamethylendiamin ableiten, unterliegt dabei keiner besonderen Beschränkung.

Als besonders vorteilhaft für viele Anwendungszwecke haben sich Polyamide mit 50 bis 80, insbesondere 60 bis 75 Gew.-% Einheiten, die sich von Terephthalsäure und Hexamethylendiamin ableiten (Einheiten a₁ und 20 bis 50, vorzugsweise 25 bis 40 Gew.-% Einheiten, die sich von ε-Caprolactam ableiten (Einheiten a₂)), erwiesen.

Neben den vorstehend beschriebenen Einheiten a₁) bis a₃) können die erfindungsgemäßen teilaromatischen Copolyamide noch untergeordnete Mengen, vorzugsweise nicht mehr als 15 Gew.-%, insbesondere nicht mehr als 10 Gew.-% an weiteren Polyamidbausteinen (a₄) enthalten, wie sie von anderen Polyamiden bekannt sind. Diese Bausteine können sich von Dicarbonsäuren mit 4 bis 16 Kohlenstoffatomen und aliphatischen oder cycloaliphatischen Diaminen mit 4 bis 16 Kohlenstoffatomen sowie von Aminocarbonsäuren bzw. entsprechenden Lactamen mit 7 bis 12 Kohlenstoffatomen ableiten. Als geeignete Monomere dieser Typen seien hier nur Suberinsäure, Azelainsäure, Sebacinsäure oder Isophthalsäure als Vertreter der Dicarbonsäuren, 1,4-Butandiamin, 1,5-Pentandiamin, Piperazin, 4,4'-Diaminodicyclohexylmethan, 2,2-(4,4'-Diaminodicyclohexyl)propan oder 3,3'-Dimethyl-4,4'-Diaminodicyclohexylmethan als Vertreter der Diamine und Capryllactam, Önanthlactam, Omega-Aminoundecansäure und Laurinlactam als Vertreter von Lactamen bzw. Aminocarbonsäuren genannt.

Die Schmelzpunkte der teilaromatischen Copolyamide A) liegen im Bereich von 260 bis über 300°C, wobei dieser hohe Schmelzpunkt auch mit einer hohen Glasübergangstemperatur von in der Regel mehr als 75, insbesondere mehr als 85°C verbunden ist.

Binäre Copolyamide auf der Basis von Terephthalsäure, Hexamethylendiamin und ε-Caprolactam weisen bei Gehalten von etwa 70 Gew.-% an Einheiten, die sich von Terephthalsäure und Hexamethylendiamin ableiten, Schmelzpunkte im Bereich von 300°C und eine Glasübergangstemperatur von mehr als 110°C auf.

Binäre Copolyamide auf der Basis von Terephthalsäure, Adipinsäure und Hexamethylendiamin (HMD) erreichen bereits bei niedrigeren Gehalten von etwa 55 Gew.-% Einheiten aus Terephthalsäure und Hexamethylendiamin Schmelzpunkte von 300°C und mehr, wobei die Glasübergangstemperatur nicht ganz so hoch liegt wie bei binären Copolyamiden, die anstelle von Adipinsäure bzw. Adipinsäure/HMD ε-Caprolactam enthalten.

Die nachfolgende nicht abschließende Aufstellung enthält die genannten, sowie weitere Polyamide A) im Sinne der Erfindung und die enthaltenen Monomeren.

### AB-Polymere:

- PA 4: Pyrrolidon
- PA 6: ε-Caprolactam
- PA 7: Ethanolactam
- PA 8: Capryllactam
- PA 9: 9-Aminopelargonsäure
- PA 11: 11-Aminoundecansäure
- PA 12: Laurinlactam

### AA/BB-Polymere

- PA 46: Tetramethylendiamin, Adipinsäure
- PA 66: Hexamethylendiamin, Adipinsäure
- PA 69: Hexamethylendiamin, Azelainsäure
- PA 610: Hexamethylendiamin, Sebacinsäure
- PA 612: Hexamethylendiamin, Decandicarbonsäure
- PA 613: Hexamethylendiamin, Undecandicarbonsäure
- PA 1212: 1,12-Dodecandiamin, Decandicarbonsäure
- PA 1313: 1,13-Diaminotridecan, Undecandicarbonsäure
- PA 6T: Hexamethylendiamin, Terephthalsäure
- PA 9T: Nonyldiamin/Terephthalsäure
- PA MXD6: m-Xylylendiamin, Adipinsäure

- PA 6I: Hexamethylendiamin, Isophthalsäure
- PA 6-3-T: Trimethylhexamethylendiamin, Terephthalsäure
- PA 6/6T: (siehe PA 6 und PA 6T)
- PA 6/66: (siehe PA 6 und PA 66)
- PA 6/12: (siehe PA 6 und PA 12)
- PA 66/61610: (siehe PA 66, PA 6 und PA 610)
- PA 61/6T: (siehe PA 6I und PA 6T)
- PA PACM 12: Diaminodicyclohexylmethan, Laurinlactam
- PA 6I/6T/PACM: wie PA 6I/6T + Diaminodicyclohexylmethan
- PA 12/MACMI: Laurinlactam, Dimethyl-diaminodicyclohexylmethan, Isophthalsäure
- PA 12/MACMT: Laurinlactam, Dimethyl-diaminodicyclohexylmethan, Terephthalsäure
- PA PDA-T: Phenylendiamin, Terephthalsäure

Es können aber auch Mischungen obiger Polyamide eingesetzt werden.

Als Komponente B) enthalten die erfindungsgemäßen Formmassen 0,01 bis 30, vorzugsweise 0,05 bis 10 und insbesondere 0,05 bis 5 Gew.-% mindestens eines hyperverzweigten Polyetheramins.

Die Komponente B) ist erhältlich durch Umsetzung mindestens eines tertiären Amins mit funktionellen Hydroxygruppen, vorzugsweise mindestens einem Di-, Tri- oder Tetraalkanolamin mit gegebenenfalls sekundären Aminen, welche Hydroxylgruppen als Substituent tragen, insbesondere Dialkanolaminen oder gegebenenfalls mit Di- oder höherfunktionellen Polyetherpolyolen, bevorzugt in Gegenwart eines Umetherungs- und Veretherungskatalysators.

Bevorzugte tertiäre Dialkanolamine mit funktionellen Hydroxygruppen sind

Diethanolalkylamine mit C1 bis C30, insbesondere C1 bis C18-Alkylresten,
Diethanolamin,
Dipropanolamin
Diisopropanolamin,
Dibutanolamin,
Dipentanolamin,
Dihexanolamin,
N-Methyl-Diethanolamin,
N-Methyl-Dipropanolamin,
N-Methyl-DÜsopropanolamin,
N-Methyl-Dibutanolamin,
N-Methyl-Dipentanolamin,
N-Methyl-Dihexanolamin,
N-Ethyl-Diethanolamin,
N-Ethyl-Dipropanolamin,
N-Ethyl-DÜsopropanolamin,
N-Ethyl-Dibutanolamin,
N-Ethyl-Dipentanolamin,
N-Ethyl-Dihexanolamin,
N-Propyl-Diethanolamin,
N-Propyl-Dipropanolamin,
N-Propyl-Diisopropanolamin,
N-Propyl-Dibutanolamin,
N-Propyl-Dipentanolamin,
N-Propyl-Dihexanolamin,
Diethanolethylamin,
Diethanolpropylamin,
Diethanolmethylamin,
Dipropanolmethylamin,
Cyclohexanoldiethanolamin,
Dicyclohexanolethanolamin,
Cyclohexyldiethanolamin,
Dicyclohexyldiethanolamin,
Dicyclohexanolethylamin,
Benzyldiethanolamin,
Dibenzylethanolamin,
Benzyldipropanolamin,
Tripentanolamin,
Trihexanolamin,
Ethylhexylethanolamin,
Octadecyldiethanolamin,
Polyethanolamine,

Bevorzugte Trialkanolamine sind
Trimethanolamin,
Triethanolamin,
Tripropanolamin,
Triisopropanolamin,
Tributanolamin,
Tripentanolamin,
oder die daraus abgeleiteten Derivate.

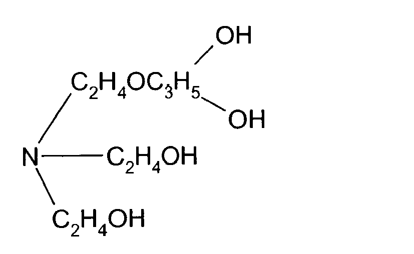

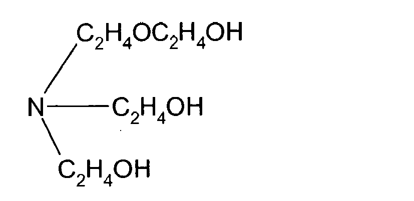

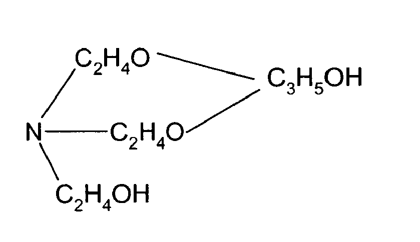

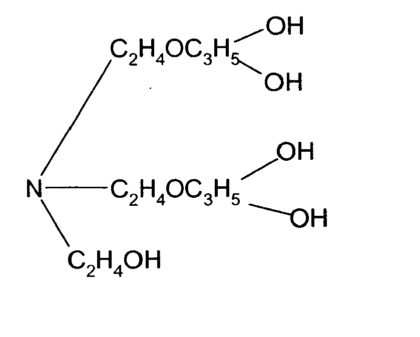

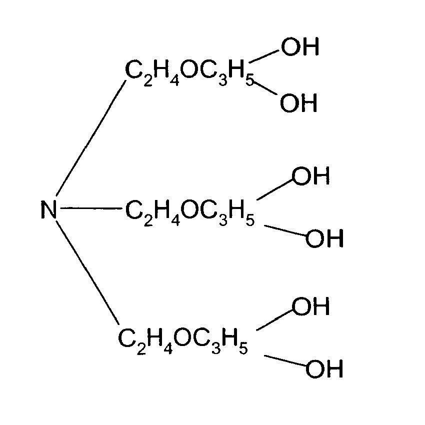

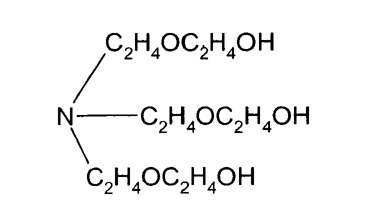

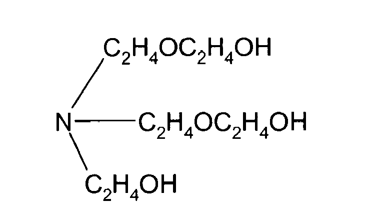

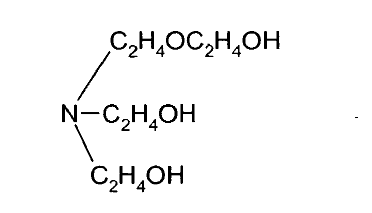

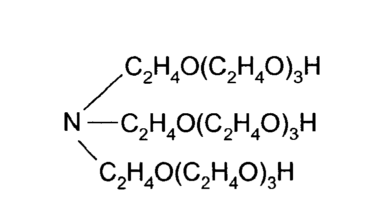

Bevorzugte Tetraalkanolamine sind

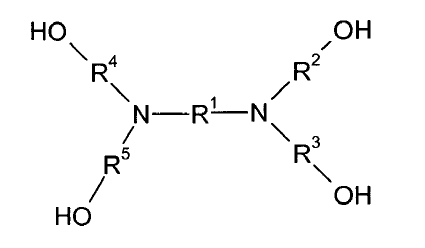

Bevorzugt R¹ = CH₂-CH₂ bis (CH₂)₈, bevorzugt (CH₂)₂-(CH₂)₄
R²-R⁵ = C₂ bis C₆, bevorzugt C₂ und C₃, z.B.
N, N , N', N'-Tetrahydroxyethylethylendiamin,
N, N, N', N'-Tetrahydroxyethylbutylendiamin,
N,N,N',N'-Tetrahydroxypropylethylendiamin,
N,N,N',N'-Tetrahydroxyisopropylethylendiamin,
N,N,N',N'-Tetrahydroxypropylbutylendiamin,
N,N,N',N'-Tetrahydroxyisopropylbutylendiamin.

Insbesondere bevorzugte Komponente B) ist erhältlich durch intermolekulare Polykondensation von mindestens einem Trialkanolamin der allgemeinen Formel 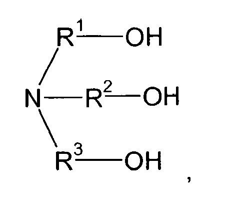 in der die Reste R¹ bis R³ unabhängig voneinander für gleiche oder unterschiedliche Alkylengruppen vorzugsweise mit 2 bis 10 C-Atomen, bevorzugt 2 bis 6 C-Atomen stehen.

Als Ausgangsmaterial wird bevorzugt Triethanolamin, Tripropanolamin, Triisopropanolamin oder Tributanolamin oder deren Mischungen eingesetzt; gegebenenfalls in Kombination mit Dialkanolaminen, wie Diethanolamin, Dipropanolamin, Diisopropanolamin, Dibutanolamin, N,N'-Dihydroxyalkyl-piperidin (alkyl = C1-C8), Dicyclohexanolamin, Dipentanolamin, Dihexanolamin, wobei Dialkanolamine bevorzugt sind.

Weiterhin können die o.g. Trialkanolamine gegebenenfalls in Kombination mit di- oder höherfunktionellen Polyetherolen, insbesondere auf der Basis von Ethylenoxid und/oder Propylenoxid eingesetzt werden.

Ganz besonders bevorzugt wird jedoch Triethanolamin und Triisopropanolamin oder deren Gemisch als Ausgangsprodukt verwendet.

Die nach dem erfindungsgemäßen Verfahren gebildeten hochfunktionellen hoch- oder hyperverzweigten Polyetheramine sind nach der Reaktion, also ohne weitere Modifikation, mit Hydroxylgruppen terminiert. Sie lösen sich gut in verschiedenen Lösemitteln.

Beispiele für derartige Lösungsmittel sind aromatische und/oder (cyclo)aliphatische Kohlenwasserstoffe und deren Gemische, halogenierte Kohlenwasserstoffe, Ketone, Ester und Ether.

Bevorzugt sind aromatische Kohlenwasserstoffe, (cyclo)aliphatische Kohlenwasserstoffe, Alkansäurealkylester, Ketone, alkoxylierte Alkansäurealkylester und deren Gemische.

Besonders bevorzugt sind ein- oder mehrfach alkylierte Benzole und Naphthaline, Ketone, Alkansäurealkylester und alkoxylierte Alkansäurealkylester sowie deren Gemische.

Als aromatische Kohlenwasserstoffgemische sind solche bevorzugt, die überwiegend aromatische C₇- bis C₁₄-Kohlenwasserstoffe umfassen und einen Siedebereich von 110 bis 300°C umfassen können, besonders bevorzugt sind Toluol, o-, m- oder p-Xylol, Trimethylbenzolisomere, Tetramethylbenzolisomere, Ethylbenzol, Cumol, Tetrahydronaphthalin und solche enthaltende Gemische.

Beispiele dafür sind die Solvesso®-Marken der Firma ExxonMobil Chemical, besonders Solvesso® 100 (CAS-Nr. 64742-95-6, überwiegend C₉- und C₁₀-Aromaten, Siedebereich etwa 154-178°C), 150 (Siedebereich etwa 182-207°C) und 200 (CAS-Nr. 64742-94-5), sowie die Shellsol®-Marken der Firma Shell. Kohlenwasserstoffgemische auf Paraffinen, Cycloparaffinen und Aromaten sind auch unter den Bezeichnungen Kristallöl (beispielsweise Kristallöl 30, Siedebereich etwa 158-198°C oder Kristallöl 60: CAS-Nr. 64742-82-1), Testbenzin (beispielsweise ebenfalls CAS-Nr. 64747-82-1) oder Solventnaphtha (leicht: Siedebereich etwa 155-180°C, schwer: Siedebereich etwa 225-300°), im Handel erhältlich. Der Aromatengehalt derartiger Kohlenwasserstoffgemische beträgt in der Regel mehr als 90 Gew.-%, bevorzugt mehr als 95, besonders bevorzugt mehr als 98 und ganz besonders bevorzugt mehr als 99 Gew.-%. Es kann sinnvoll sein, Kohlenwasserstoffgemische mit einem besonders verringerten Gehalt an Naphthalin einzusetzen.

Der Gehalt an aliphatischen Kohlenwasserstoffen beträgt in der Regel weniger als 5, bevorzugt weniger als 2,5 und besonders bevorzugt weniger als 1 Gew.-%.

Halogenierte Kohlenwasserstoffe sind beispielsweise Chlorbenzol und Dichlorbenzol oder dessen Isomerengemische.

Ester sind beispielsweise n-Butylacetat, Ethylacetat, 1-Methoxypropylacetat-2 und 2-Methoxyethylacetat.

Ether sind beispielsweise THF, Dioxan sowie die Dimethyl-, ethyl- oder n-butylether von Ethylenglykol, Diethylenglykol, Triethylenglykol, Propylenglykol, Dipropylenglykol oder Tripropylenglykol.

Ketone sind beispielsweise Aceton, 2-Butanon, 2-Pentanon, 3-Pentanon, Hexanon, iso-Butyl-methylketon, Heptanon, Cyclopentanon, Cyclohexanon oder Cycloheptanon.

(Cyclo)aliphatische Kohlenwasserstoffe sind beispielsweise Dekalin, alkyliertes Dekalin und Isomerengemische von geradlinigen oder verzweigten Alkanen und/oder Cycloalkynen.

Weiterhin bevorzugt sind n-Butylacetat, Ethylacetat, 1-Methoxypropylacetat-2,3-Methoxyethylacetat, 2-Butanon, iso-Butyl-methylketon sowie deren Gemische, insbesondere mit den oben aufgeführten aromatischen Kohlenwasserstoffgemischen.

Derartige Gemische können im Volumenverhältnis 5:1 bis 1:5 erstellt werden, bevorzugt im Volumenverhältnis 4:1 bis 1:4, besonders bevorzugt im Volumenverhältnis 3:1 bis 1:3 und ganz besonders bevorzugt im Volumenverhältnis 2:1 bis 1:2.

Bevorzugt Lösungsmittel sind Butylacetat, Methoxypropylacetat, iso-Butyl-methylketon, 2-Butanon, Solvesso®-Marken und Xylol.

Weiterhin als Lösungsmittel geeignet können für die Polyetheramine zum Beispiel Wasser, Alkohole, wie Methanol, Ethanol, Butanol, Alkohol/Wasser-Mischungen, Aceton, 2-Butanon, Dimethylformamid, Dimethylacetamid, N-Methylpyrrolidon, N-Ethylpyrrolidon, Ethylencarbonat oder Propylencarbonat sein.

Unter einem hochfunktionellen hoch- oder hyperverzweigten Polyetheramin ist im Rahmen dieser Erfindung ein Produkt zu verstehen, das neben den Ethergruppen und den Aminogruppen, die das Polymergerüst bilden, end- oder seitenständig weiterhin im Mittel mindestens drei, bevorzugt mindestens sechs, mehr bevorzugt mindestens zehn funktionelle Gruppen aufweist. Bei den funktionellen Gruppen handelt es sich um OH-Gruppen. Die Anzahl der end- oder seitenständigen funktionellen Gruppen ist prinzipiell nach oben nicht beschränkt, jedoch können Produkte mit sehr hoher Anzahl funktioneller Gruppen unerwünschte Eigenschaften, wie beispielsweise hohe Viskosität oder schlechte Löslichkeit, aufweisen. Die hochfunktionellen Polyetheramin-polyole der vorliegenden Erfindung weisen zumeist nicht mehr als 500 end- oder seitenständige funktionelle Gruppen, bevorzugt nicht mehr als 100 end- oder seitenständige Gruppen auf.

Unter hyperverzweigten Polyetheraminen werden im Rahmen dieser Erfindung unvernetzte Makromoleküle mit Hydroxyl-, Ether- und Amingruppen verstanden, die sowohl strukturell als auch molekular uneinheitlich sind. Sie können auf der einen Seite ausgehend von einem Zentralmolekül analog zu Dendrimeren, jedoch mit uneinheitlicher Kettenlänge der Äste aufgebaut sein. Sie können auf der anderen Seite auch linear, mit funktionellen Seitengruppen, aufgebaut sein oder aber, als Kombination der beiden Extreme, lineare und verzweigte Molekülteile aufweisen. Zur Definition von dendrimeren und hyperverzweigten Polymeren siehe auch P.J. Flory, J. Am. Chem. Soc. 1952, 74, 2718 und H. Frey et al., Chem. Eur. J. 2000, 6, No. 14, 2499.

Die Herstellung der Polyetheramine erfolgt entweder in Substanz oder in Lösung. Als Lösungsmittel kommen die bereits oben angeführten Lösungsmittel in Frage. Es stellt eine bevorzugte Ausführungsform dar, die Reaktion ohne Lösungsmittel durchzuführen.

Die Temperatur bei der Herstellung sollte ausreichend für die Umsetzung des Aminoalkohols sein. In der Regel wird für die Umsetzung eine Temperatur von 100°C bis 350°C, bevorzugt 150 bis 300, besonders bevorzugt 180 bis 280°C und speziell 200 bis 250°C benötigt.

In einer bevorzugten Ausführungsform wird die Kondensationsreaktion in Substanz durchgeführt. Das bei der Reaktion freiwerdende Wasser oder niedermolekulare Reaktionsprodukte können zur Beschleunigung der Reaktion aus dem Reaktionsgleichgewicht entfernt werden, z.B. destillativ, gegebenenfalls bei vermindertem Druck.

Die Abtrennung des Wassers oder der niedermolekularen Reaktionsprodukte kann auch durch Durchleiten eines unter den Reaktionsbedingungen im wesentlichen inerten Gasstromes (Strippen), wie z.B. Stickstoff oder Edelgas, zum Beispiel Helium, Neon oder Argon, unterstützt werden.

Zur Beschleunigung der Reaktion können auch Katalysatoren oder Katalysatorgemische zugegeben werden. Geeignete Katalysatoren sind Verbindungen, die Veretherungs- oder Umetherungsreaktionen katalysieren, z.B. Alkalihydroxide, Alkalicarbonate, Alkalihydrogencarbonate, vorzugsweise des Natriums, Kaliums oder Cäsiums, saure Verbindungen wie Eisenschlorid oder Zinkchlorid, Ameisensäure, Oxalsäure oder Phosphor-haltige saure Verbindungen, wie Phosphorsäure, Polyphosphorsäure, Phosphorige Säure oder Unterphosphorige Säure.

Vorzugsweise werden Phosphorsäure, Phosphorige Säure oder Unterphosphorige Säure, gegebenenfalls in mit Wasser verdünnter Form, eingesetzt.

Die Zugabe des Katalysators erfolgt im allgemeinen in einer Menge von 0,001 bis 10, bevorzugt von 0,005 bis 7, besonders bevorzugt 0,01 bis 5 mol-%, bezogen auf die Menge des eingesetzten Alkanolamins oder Alkanolamingemisches.

Ferner ist es auch möglich, sowohl durch Zugabe des geeigneten Katalysators, als auch durch Wahl einer geeigneten Temperatur die intermolekulare Polykondensationsreaktion zu steuern. Weiterhin lässt sich über die Zusammensetzung der Ausgangskomponenten und über die Verweilzeit das mittlere Molekulargewicht des Polymeren einstellen.

Die Polymere, die bei erhöhter Temperatur hergestellt wurden, sind bei Raumtemperatur üblicherweise über einen längeren Zeitraum, beispielsweise über mindestens 6 Wochen stabil, ohne Trübungen, Ausfällungen und/oder einen Viskositätsanstieg zu zeigen.

Zum Abbruch der intermolekularen Polykondensationsreaktion gibt es verschiedene Möglichkeiten. Beispielsweise kann die Temperatur auf einen Bereich abgesenkt werden, in dem die Reaktion zum Stillstand kommt und das Polykondensationsprodukt lagerstabil ist. Dies ist in der Regel unterhalb von 60°C, bevorzugt unter 50°C, besonders bevorzugt unterhalb von 40°C und ganz besonders bevorzugt bei Raumtemperatur der Fall.

Weiterhin kann man den Katalysator desaktivieren, bei basischen Katalysatoren z.B. durch Zugabe einer sauren Komponente, z.B. einer Lewis-Säure oder einer organischen oder anorganischen Protonensäure, bei sauren Katalysatoren durch Zugabe einer basischen Komponente, z.B. einer Lewis-Base oder einer organischen oder anorganischen Base.

Ferner ist es möglich, die Reaktion durch Verdünnen mit einem vorgekühlten Lösungsmittel zu stoppen. Dies ist insbesondere dann bevorzugt, wenn man die Viskosität des Reaktionsgemischs durch Zugabe von Lösungsmittel anpassen muss.

Die erfindungsgemäß verwendeten hochfunktionellen hoch- oder hyperverzweigten Polyetheramine weisen in der Regel eine Glasübergangstemperatur von weniger als 50°C, bevorzugt weniger als 30 und besonders bevorzugt weniger als 10°C auf.

Die OH-Zahl beträgt meist 50 bis 1000 mg KOH/g, bevorzugt 100 bis 900 mg KOH/g und ganz bevorzugt 150 bis 800 mg KOH/g.

Das gewichtsmittlere Molgewicht M_{w} liegt zumeist zwischen 1.000 und 500.000, bevorzugt von 2.000 bis 300.000 g/mol, das zahlenmittlere Molgewicht Mₙ zwischen 500 und 50.000, bevorzugt zwischen 1.000 und 40.000 g/mol, gemessen mittels Gelpermeationschromatographie mit Hexafluorisopropanol als mobiler Phase und Polymethylmethacrylat (PMMA) als Standard.

Die Herstellung der erfindungsgemäßen hochfunktionellen Polyetheramine erfolgt zumeist in einem Druckbereich von 0,1 mbar bis 20 bar, bevorzugt bei 1 mbar bis 5 bar, in Reaktoren oder Reaktorkaskaden, die im Batchbetrieb, halbkontinuierlich oder kontinuierlich betrieben werden.

Durch die vorgenannte Einstellung der Reaktionsbedingungen und gegebenenfalls durch die Wahl des geeigneten Lösemittels können die erfindungsgemäßen Produkte nach der Herstellung ohne weitere Reinigung weiterverarbeitet werden.

Falls erforderlich, kann das Reaktionsgemisch einer Entfärbung, beispielsweise durch Behandlung mit Aktivkohle oder Metalloxiden, wie z.B. Aluminiumoxid, Siliciumoxid, Magnesiumoxid, Zirkonoxid, Boroxid oder Gemischen davon, in Mengen von beispielsweise 0,1 bis 50 Gew.-%, bevorzugt 0,5 bis 25 Gew.-%, besonders bevorzugt 1 bis 10 Gew.-% bei Temperaturen von beispielsweise 10 bis 100°C, bevorzugt 20 bis 80°C und besonders bevorzugt 30 bis 60°C unterworfen werden.

Gegebenenfalls kann das Reaktionsgemisch auch zur Entfernung von eventuell vorhandenen Ausfällungen filtriert werden.

In einer weiteren bevorzugten Ausführungsform wird das Produkt gestrippt, das heißt von niedermolekularen, flüchtigen Verbindungen befreit. Dazu kann nach Erreichen des gewünschten Umsatzgrades der Katalysator optional desaktiviert und die niedermolekularen flüchtigen Bestandteile, z.B. Wasser, die als Einsatzstoff verwendeten Aminoalkohole oder leichtflüchtige oligomere oder cyclische Verbindungen destillativ, gegebenenfalls unter Einleitung eines Gases, vorzugsweise Stickstoff, oder Edelgase, gegebenenfalls bei vermindertem Druck, entfernt werden.

Die nach dem erfindungsgemäßen Verfahren gebildeten hochfunktionellen hochverzweigten Polyetheramine sind nach der Reaktion, also ohne weitere Modifikation, mit Hydroxylgruppen terminiert. Sie lösen sich gut in verschiedenen Lösemitteln, z.B. in . Wasser, Alkoholen, wie Methanol, Ethanol, Butanol, Alkohol/Wasser-Mischungen, Aceton, 2-Butanon, Essigester, Butylacetat, Methoxypropylacetat, Methoxyethylacetat, Terahydrofuran, Dimethylformamid, Dimethylacetamid, N-Methylpyrrolidon, Ethylencarbonat oder Propylencarbonat.

Als Komponente C) können die erfindungsgemäßen Formmassen 0 bis 70, insbesondere bis zu 50 Gew.-% weiterer Zusatzstoffe und Verarbeitungshilfsmittel enthalten, welche verschieden von B) und/oder A) sind.

Die thermoplastischen Formmassen können als Komponente C) erfindungsgemäß 0,01 bis 30 Gew.-% mindestens eines Polyethylenimin-Homopolymerisats oder-Copolymerisates enthalten. Bevorzugt beträgt der Anteil von C) 0,3 bis 4 Gew.-% und insbesondere 0,3 bis 3 Gew.-% bezogen auf A) bis C).

Unter Polyethyleniminen im Sinne der vorliegenden Erfindung sollen sowohl Homo- als auch Copolymerisate verstanden werden, welche beispielsweise nach den Verfahren in Ullmann Electronic Release unter dem Stichwort "Aziridine" oder gemäß WO-A 94/12560 erhältlich sind.

Die Homopolymerisate sind im allgemeinen durch Polymerisation von Ethylenimin (Aziridin) in wässriger oder organischer Lösung in Gegenwart von säureabspaltenden Verbindungen, Säuren oder Lewis-Säuren erhältlich. Derartige Homopolymerisate sind verzweigte Polymere, die in der Regel primäre, sekundäre und tertiäre Aminogruppen im Verhältnis von ca. 30 % zu 40 % zu 30 % enthalten. Die Verteilung der Aminogruppen kann im allgemeinen mittels ¹³C-NMR Spektroskopie bestimmt werden.

Als Comonomere werden vorzugsweise Verbindungen eingesetzt, welche mindestens zwei Aminofunktionen aufweisen. Als geeignete Comonomere seien beispielsweise Alkylendiamine mit 2 bis 10 C-Atomen im Alkylenrest genannt, wobei Ethylendiamin und Propylendiamin bevorzugt sind. Weiterhin geeignete Comonomere sind Diethylentriamin, Triethylentetramin, Tetraethylenpentamin, Dipropylentriamin, Tripropylentetramin, Dihexamethylentriamin, Aminopropylethylendiamin und Bisaminopropylethylendiamin.

Polyethylenimine weisen üblicherweise ein mittleres Molekulargewicht (Gewichtsmittel) von 100 bis 3.000.000, vorzugsweise von 800 bis 2.000.000 auf (bestimmt mittels Lichtstreuung).

Darüber hinaus eignen sich vernetzte Polyethylenimine, die durch Reaktion von Polyethyleniminen mit bi- oder polyfunktionellen Vernetzern erhältlich sind, welche als funktionelle Gruppe mindestens eine Halogenhydrin-, Glycidyl-, Aziridin-, Isocyanateinheit oder ein Halogenatom aufweisen. Als Beispiele seinen Epichlorhydrin oder Bischlorhydrinether von Polyalkylenglykolen mit 2 bis 100 Ethylenoxid- und/oder Propylenoxid-Einheiten sowie die in der DE-A 19 93 17 20 und US 4 144 123 aufgeführten Verbindungen genannt. Verfahren zur Herstellung von vernetzten Polyethyleniminen sind u.a. aus den o.g. Schriften sowie EP-A 895 521 und EP-A 25 515 bekannt.

Weiterhin sind gepfropfte Polyethylenimine geeignet, wobei als Pfropfmittel sämtliche Verbindungen eingesetzt werden können, die mit den Amino- bzw. Iminogruppen der Polyethylenimine reagieren können. Geeignete Pfropfmittel und Verfahren zur Herstellung von gepfropften Polyethyleniminen sind beispielsweise der EP-A 675 914 zu entnehmen.

Ebenso geeignete Polyethylenimine im Sinne der Erfindung sind amidierte Polymerisate, die üblicherweise durch Umsetzung von Polyethyleniminen mit Carbonsäuren, deren Ester oder Anhydride, Carbonsäureamide oder Carbonsäurehalogenide erhältlich sind. Je nach Anteil der amidierten Stickstoffatome in der Polyethyleniminkette können die amidierten Polymerisate nachträglich mit den genannten Vernetzern vernetzt werden. Vorzugsweise werden hierbei bis zu 30 % der Aminofunktionen amidiert, damit für eine anschließende Vernetzungsreaktion noch genügend primäre und/oder sekundäre Stickstoffatome zur Verfügung stehen.

Außerdem eignen sich alkoxylierte Polyethylenimine, die beispielsweise durch Umsetzung von Polyethylenimin mit Ethylenoxid und/oder Propylenoxid erhältlich sind. Auch derartige alkoxylierte Polymerisate sind anschließend vernetzbar.

Als weitere geeignete erfindungsgemäße Polyethylenimine seien hydroxylgruppenhaltige Polyethylenimine und amphotere Polyethylenimine (Einbau von anionischen Gruppen) genannt sowie lipophile Polyethylenimine, die in der Regel durch Einbau langkettiger Kohlenwasserstoffreste in die Polymerkette erhalten werden. Verfahren zur Herstellung derartiger Polyethylenimine sind dem Fachmann bekannt, so dass sich weitere Einzelheiten hierzu erübrigen.

Als Komponente C) können die erfindungsgemäßen Formmassen 0 bis 3, bevorzugt 0,05 bis 3, vorzugsweise 0,1 bis 1,5 und insbesondere 0,1 bis 1 Gew.-% eines Schmiermittels enthalten.

Bevorzugt sind Al-, Alkali-, Erdalkalisalze oder Ester- oder Amide von Fettsäuren mit 10 bis 44 C-Atomen, vorzugsweise mit 14 bis 44 C-Atomen.

Die Metallionen sind vorzugsweise Erdalkali und Al, wobei Ca oder Mg besonders bevorzugt sind.

Bevorzugte Metallsalze sind Ca-Stearat und Ca-Montanat sowie Al-Stearat.

Es können auch Mischungen verschiedener Salze eingesetzt werden, wobei das Mischungsverhältnis beliebig ist.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitat, Glycerintrilaurat, Glycerinmonobehenat und Pentaerythrittetrastearat.

Es können auch Mischungen verschiedener Ester oder Amide oder Ester mit Amiden in Kombination eingesetzt werden, wobei das Mischungsverhältnis beliebig ist.

Als weitere Komponenten C) können die erfindungsgemäßen Formmassen Wärmestabilisatoren oder Antioxidantien oder deren Mischungen, ausgewählt aus der Gruppe der Kupferverbindungen, sterisch gehinderter Phenole, sterisch gehinderter aliphatischer Amine und/oder aromatischer Amine, enthalten.

Kupferverbindungen sind in den erfindungsgemäßen PA-Formmassen zu 0,05 bis 3, vorzugsweise 0,1 bis 1,5 und insbesondere 0,1 bis 1 Gew.-% enthalten, vorzugsweise als Cu-(1)-Halogenid, insbesondere in Mischung mit einem Alkalihalogenid, vorzugsweise KJ, insbesondere im Verhältnis 1 : 4, oder eines sterisch gehinderten Phenols oder eines Aminstabilisators oder deren Mischungen enthalten.

Als Salze des einwertigen Kupfers kommen vorzugsweise Kupfer(I)-Acetat, Kupfer(I)-Chlorid, -Bromid und -Jodid in Frage. Sie sind in Mengen von 5 bis 500 ppm Kupfer, vorzugsweise 10 bis 250 ppm, bezogen auf Polyamid, enthalten.

Die vorteilhaften Eigenschaften werden insbesondere erhalten, wenn das Kupfer in molekularer Verteilung im Polyamid vorliegt. Dies wird erreicht, wenn man der Formmasse ein Konzentrat zusetzt, das Polyamid, ein Salz des einwertigen Kupfers und ein Alkalihalogenid in Form einer festen, homogenen Lösung enthält. Ein typisches Konzentrat besteht z.B. aus 79 bis 95 Gew.-% Polyamid und 21 bis 5 Gew.-% eines Gemisches aus Kupferjodid oder -bromid und Kaliumjodid. Die Konzentration der festen homogenen Lösung an Kupfer liegt bevorzugt zwischen 0,3 und 3, insbesondere zwischen 0,5 und 2 Gew.-%, bezogen auf das Gesamtgewicht der Lösung und das molare Verhältnis von Kupfer(I)-Jodid zu Kaliumjodid liegt zwischen 1 und 11,5, vorzugsweise zwischen 1 und 5.

Geeignete Polyamide für das Konzentrat sind Homopolyamide und Copolyamide, insbesondere Polyamid 6 und Polyamid 6.6.

Als sterisch gehinderte Phenole eignen sich prinzipiell alle Verbindungen mit phenolischer Struktur, die am phenolischen Ring mindestens eine sterisch anspruchsvolle Gruppe aufweisen.

Vorzugsweise kommen z.B. Verbindungen der Formel 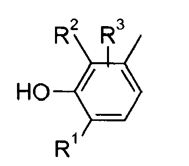 in Betracht, in der bedeuten:
R¹ und R² eine Alkylgruppe, eine substituierte Alkylgruppe oder eine substituierte Triazolgruppe, wobei die Reste R¹ und R² gleich oder verschieden sein können und R³ eine Alkylgruppe, eine substituierte Alkylgruppe, eine Alkoxigruppe oder eine substituierte Aminogruppe.

Antioxidantien der genannten Art werden beispielsweise in der DE-A 27 02 661 (US-A 4 360 617) beschrieben.

Eine weitere Gruppe bevorzugter sterisch gehinderter Phenole leiten sich von substituierten Benzolcarbonsäuren ab, insbesondere von substituierten Benzolpropionsäuren.

Besonders bevorzugte Verbindungen aus dieser Klasse sind Verbindungen der Formel 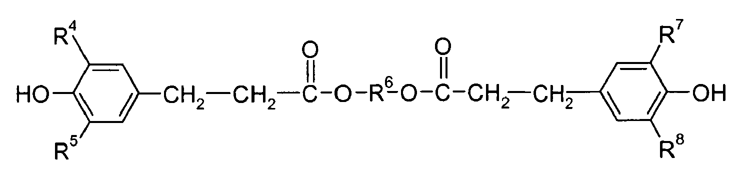 wobei R⁴, R⁵, R⁷ und R⁸ unabhängig voneinander C₁-C₈-Alkylgruppen darstellen, die ihrerseits substituiert sein können (mindestens eine davon ist eine sterisch anspruchsvolle Gruppe) und R⁶ einen zweiwertigen aliphatischen Rest mit 1 bis 10 C-Atomen bedeutet, der in der Hauptkette auch C-O-Bindungen aufweisen kann.

Bevorzugte Verbindungen, die dieser Formel entsprechen, sind 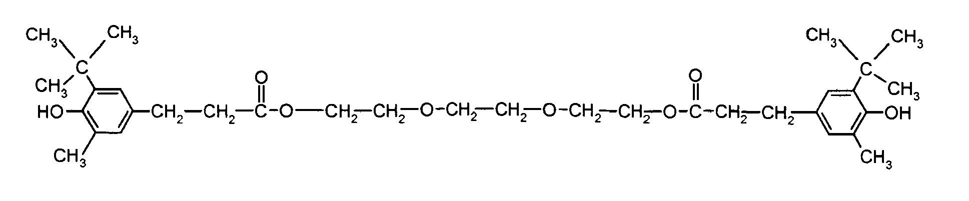 (Irganox®245 der Firma Ciba-Geigy 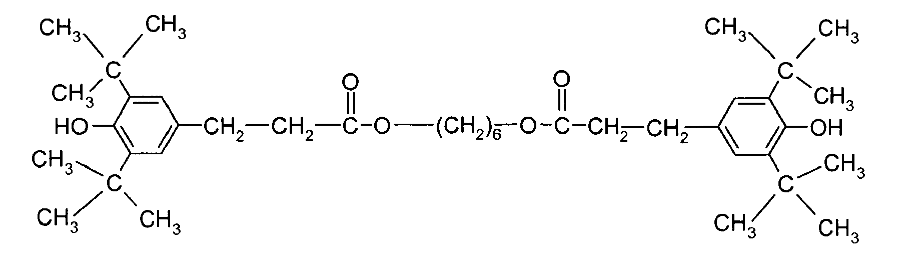 (Irganox® 259 der Firma Ciba-Geigy)

Beispielhaft genannt seien insgesamt als sterisch gehinderte Phenole:
2,2'-Methylen-bis-(4-methyl-6-tert.-butylphenol), 1,6-Hexandiol-bis[3-(3,5-di-tert.-butyl-4-hydroxyphenyl)-propionat], Pentaerythrityl-tetrakis-[3-(3,5-di-tert.-butyl-4-hydroxyphenyl)-propionat], Distearyl-3,5-di-tert.-butyl-4-hydroxybenzylphosphonat, 2,6,7-Trioxa-1-phosphabicyclo-[2.2.2]oct-4-yl-methyl-3,5-di-tert.-butyl-4-hydroxyhydrocinnamat, 3,5-Di-tert.-butyl-4-hydroxyphenyl-3,5-distearyl-thiotriazylamin, 2-(2'-Hydroxy-3'-hydroxy-3',5'-di-tert.-butylphenyl)-5-chlorbenzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyl-dimethylamin.

Als besonders wirksam erwiesen haben sich und daher vorzugsweise verwendet werden 2,2'-Methylen-bis-(4-methyl-6-tert.-butylphenol), 1,6-Hexandiol-bis-(3,5-di-tert.-butyl-4-hydroxyphenyl]-propionat (Irganox® 259), Pentaerythrityl-tetrakis-[3-(3,5-di-tert.-butyl-4-hydroxyphenyl)-propionat] sowie N,N'-Hexamethylen-bis-3,5-di-tert.-butyl-4-hydroxyhydrocinnamid (Irganox® 1098) und das vorstehend beschriebene Irganox® 245 der Firma Ciba Geigy, das besonders gut geeignet ist.

Die phenolischen Antioxidantien, die einzeln oder als Gemische eingesetzt werden können, sind in einer Menge von 0,05 bis zu 3 Gew.-%, vorzugsweise von 0,1 bis 1,5 Gew.-%, insbesondere 0,1 bis 1 Gew.-%, bezogen auf das Gesamtgewicht der Formmassen A) bis C) enthalten.

In manchen Fällen haben sich sterisch gehinderte Phenole mit nicht mehr als einer sterisch gehinderten Gruppe in ortho-Stellung zur phenolischen Hydroxygruppe als besonders vorteilhaft erwiesen; insbesondere bei der Beurteilung der Farbstabilität bei Lagerung in diffusem Licht über längere Zeiträume.

Als faser- oder teilchenförmige Füllstoffe C) seien Kohlenstofffasern, Glasfasern, Glaskugeln, amorphe Kieselsäure, Calciumsilicat, Catciumrrietasilicat, Magnesiumcarbonat, Kaolin, Kreide, gepulverter Quarz, Glimmer, Bariumsulfat und Feldspat genannt, die in Mengen bis zu 40 Gew.-%, insbesondere 1 bis 15 Gew.-% eingesetzt werden.

Als bevorzugte faserförmige Füllstoffe seien Kohlenstofffasern, Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Die faserförmigen Füllstoffe können zur besseren Verträglichkeit mit dem Thermoplasten mit einer Silanverbindung oberflächlich vorbehandelt sein.

Geeignete Silanverbindungen sind solche der allgemeinen Formel

(X-(CH₂)ₙ)ₖ-Si-(O-CₘH2ₘ₊₁)₄₋ₖ

in der die Substituenten folgende Bedeutung haben:
- X: NH₂-, 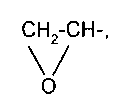 HO-,
- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im allgemeinen in Mengen von 0,01 bis 2, vorzugsweise 0,025 bis 1,0 und insbesondere 0,05 bis 0,5 Gew.-% (bezogen auf die faserförmigen Füllstoffe) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein UD-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als weitere Füllstoffe seien Kaolin, calciniertes Kaolin, Wollastonit, Talkum und Kreide genannt sowie zusätzlich plättchen- oder nadelförmige Nanofüllstoffe bevorzugt in Mengen zwischen 0,1 und 10 % . Bevorzugt werden hierfür Böhmit, Bentonit, Montmorillonit, Vermicullit, Hektorit und Laponit eingesetzt. Um eine gute Verträglichkeit der plättchenförmigen Nanofüllstoffe mit dem organischen Bindemittel zu erhalten, werden die plättchenförmigen Nanofüllstoffe nach dem Stand der Technik organisch modifiziert. Der Zusatz der plättchen- oder nadelförmigen Nanofüllstoffe zu den erfindungsgemäßen Nanokompositen führt zu einer weiteren Steigerung der mechanischen Festigkeit.

Insbesondere wird Talkum verwendet, welches ein hydratisiertes Magnesiumsilikat der Zusammensetzung Mg_{3[}(OH)₂/Si₄O₁₀] oder 3 MgO 4 SiO_{2˙}H₂O ist. Diese sogenannten Drei-Schicht-Phyllosilikate weisen einen triklinen, monoklinen oder rhombischen Kristallaufbau auf mit blättchenförmigem Erscheinungsbild. An weiteren Spurenelementen können Mn, Ti, Cr, Ni, Na und K anwesend sein, wobei die OH-Gruppe teilweise durch Fluorid ersetzt sein kann.

Besonders bevorzugt wird Talkum eingesetzt, dessen Teilchengrößen zu 99,5 % < 20 µm beträgt. Die Teilchengrößenverteilung wird üblicherweise durch Sedimentationsanalyse bestimmt und beträgt vorzugsweise:

| | |
|---|---|
| < 20 µm | 99,5 Gew.-% |
| < 10 µm | 99 Gew.-% |
| < 5 µm | 85 Gew.-% |
| < 3 µm | 60 Gew.-% |
| < 2 µm | 43 Gew.-%. |

Derartige Produkte sind im Handel als Micro-Talc I.T. extra (Fa. Omya) erhältlich.

Beispiele für Schlagzähmodifier als Komponente C) sind Kautschuke, welche funktionelle Gruppen aufweisen können. Es können auch Mischungen aus zwei oder mehreren unterschiedlichen schlagzähmodifizierenden Kautschuken eingesetzt werden.

Kautschuke, die die Zähigkeit der Formmassen erhöhen enthalten im allgemeinen einen elastomeren Anteil, der eine Glasübergangstemperatur von weniger als -10°C, vorzugsweise von weniger als -30°C aufweist, und sie enthalten mindestens eine funktionelle Gruppe, die mit dem Polyamid reagieren kann. Geeignete funktionelle Gruppen sind beispielsweise Carbonsäure-, Carbonsäureanhydrid-, Carbonsäureester-, Carbonsäureamid-, Carbonsäureimid-, Amino-, Hydroxyl-, Epoxid-, Urethan- oder Oxazolingruppen, bevorzugt Carbonsäureanhydridgruppen.

Zu den bevorzugten funktionalisierten Kautschuken zählen funktionalisierte Polyolefinkautschuke, die aus folgenden Komponenten aufgebaut sind:
1. 40 bis 99 Gew.-% mindestens eines alpha-Olefins mit 2 bis 8 C-Atomen,
2. 0 bis 50 Gew.-% eines Diens,
3. 0 bis 45 Gew.-% eines C₁-C₁₂-Alkylesters der Acrylsäure oder Methacrylsäure oder Mischungen derartiger Ester,
4. 0 bis 40 Gew.-% einer ethylenisch ungesättigten C₂-C₂₀-Mono- oder Dicarbonsäure oder einem funktionellen Derivat einer solchen Säure,
5. 0 bis 40 Gew.-% eines Epoxygruppen enthaltenden Monomeren, und
6. 0 bis 5 Gew.-% sonstiger radikalisch polymerisierbarer Monomerer,
wobei die Summe der Komponenten 3) bis 5) mindestens 1 bis 45 Gew.-% beträgt, bezogen auf die Komponenten 1) bis 6).

Als Beispiele für geeignete α-Olefine können Ethylen, Propylen, 1-Butylen, 1-Pentylen, 1-Hexylen, 1-Heptylen, 1-Octylen, 2-Methylpropylen, 3-Methyl-1-butylen und 3-Ethyl-1-butylen genannt werden, wobei Ethylen und Propylen bevorzugt sind.

Als geeignete Dien-Monomere seien beispielsweise konjugierte Diene mit 4 bis 8 C-Atomen, wie Isopren und Butadien, nicht-konjugierte Diene mit 5 bis 25 C-Atomen, wie Penta-1,4-dien, Hexa-1,4-dien, Hexa-1,5-dien, 2,5-Dimethylhexa-1,5-dien und Octa-1,4-dien, cyclische Diene, wie Cyclopentadien, Cyclohexadiene, Cyclooctadiene und Dicyclopentadien, sowie Alkenylnorbornen, wie 5-Ethyliden-2-norbornen, 5-Butyliden-2-norbornen, 2- Methallyl-5-norbornen, 2-lsopropenyl-5-norbornen und Tricyclodiene, wie 3- Methyltricyclo-(5.2.1.0.2.6)-3,8-decadien, oder deren Mischungen genannt. Bevorzugt werden Hexa-1,5-dien, 5-Ethyliden-norbornen und Dicyclopentadien.

Der Diengehalt beträgt vorzugsweise 0,5 bis 50, insbesondere 2 bis 20 und besonders bevorzugt 3 bis 15 Gew.-%, bezogen auf das Gesamtgewicht des Olefinpolymerisats. Beispiele für geeignete Ester sind Methyl-, Ethyl-, Propyl-, n-Butyl, i-Butyl- und 2-Ethylhexyl-, Octyl- und Decylacrylate bzw. die entsprechenden Ester der Methacrylsäure. Von diesen werden Methyl-, Ethyl-, Propyl-, n-Butyl- und 2- Ethylhexylacrylat bzw. -methacrylat besonders bevorzugt.

Anstelle der Ester oder zusätzlich zu diesen können in den Olefinpolymerisaten auch säurefunktionelle und/oder latent säurefunktionelle Monomere ethylenisch ungesättigter Mono- oder Dicarbonsäuren enthalten sein.

Beispiele für ethylenisch ungesättigte Mono- oder Dicarbonsäuren sind Acrylsäure, Methacrylsäure, tertiäre Alkylester dieser Säuren, insbesondere tert.-Butylacrylat und Dicarbonsäuren, wie Maleinsäure und Fumarsäure, oder Derivate dieser Säuren sowie deren Monoester.

Als latent säurefunktionelle Monomere sollen solche Verbindungen verstanden werden, die unter den Polymerisationsbedingungen bzw. bei der Einarbeitung der Olefinpolymerisate in die Formmassen freie Säuregruppen bilden. Als Beispiele hierfür seien Anhydride von Dicarbonsäuren mit 2 bis 20 C-Atomen, insbesondere Maleinsäureanhydrid und tertiäre C₁-C₁₂-Alkylester der vorstehend genannten Säuren, insbesondere tert.-Butylacrylat und tert.-Butylmethacrylat angeführt.

Als sonstige Monomere kommen z. B. Vinylester und Vinylether in Betracht.

Besonders bevorzugt sind Olefinpolymerisate aus 50 bis 98,9, insbesondere 60 bis 94,85 Gew.-% Ethylen, und 1 bis 50, insbesondere 5 bis 40 Gew.-% eines Esters der Acryl- oder Methacrylsäure 0,1 bis 20,0, insbesondere 0,15 bis 15 Gew.-% Glycidylacrylat und/oder Glycidylmethacrylat, Acrylsäure und/oder Maleinsäureanhydrid.

Besonders geeignete funktionalisierte Kautschuke sind Ethylen-Methylmethacrylat-Glycidylmethacrylat-, Ethylen-Methylacrylat-Glycidylmethacrylat-, Ethylen-Methylacrylat-Glycidylacrylat- und Ethylen-Methylmethacrylat-Glycidylacrylat-Polymere.

Die Herstellung der vorstehend beschriebenen Polymere kann nach an sich bekannten Verfahren erfolgen, vorzugsweise durch statistische Copolymerisation unter hohem Druck und erhöhter Temperatur.

Der Schmelzindex dieser Copolymere liegt im Allgemeinen im Bereich von 1 bis 80 g/10 min (gemessen bei 190°C und 2,16 kg Belastung).

Als Kautschuke kommen weiterhin kommerzielle Ethylen-α-Olefin-Copolymere, welche mit Polyamid reaktionsfähige Gruppen enthalten, in Betracht. Die Herstellung der zugrunde liegenden Ethylen-α-Olefin-Copolymere erfolgt durch Übergangsmetallkatalyse in der Gasphase oder in Lösung. Als Comonomere kommen folgende α-Olefine in Frage: Propylen, 1-Buten, 1-Penten, 4-Methyl-1-penten, 1-Hexen, 1-Hepten, 1-Octen, 1-Nonen, 1-Decen, 1-Undecen, 1-Dodecen, Styrol und substituierte Styrole, Vinylester, Vinylacetate, Acrylester, Methacrylester, Glycidylacrylate und -methacrylate, Hydroxyethylacrylate, Acrylamide, Acrylnitril, Allylamin; Diene, wie z.B. Butadien Isopren.

Besonders bevorzugt sind Ethylen/1-Octen-Copolymere, Ethylen/1-Buten-Copolymere, Ethylen-Propylen-Copolymere, wobei Zusammensetzungen aus
25 bis 85 Gew.-%, vorzugsweise 35 bis 80 Gew.-% Ethylen,
14,9 bis 72 Gew.-%, vorzugsweise 19,8 bis 63 Gew.-% 1-Octen oder 1-Buten oder Propylen oder deren Mischungen
0,1 bis 3 Gew.-%, vorzugsweise 0,2 bis 2 Gew.-% einer ethylenisch ungesättigten Mono- oder Dicarbonsäure oder einem funktionellen Derivat einer solchen Säure.
besonders bevorzugt sind.

Das Molekulargewicht dieser Ethylen-α-Olefin-Copolymere liegt zwischen 10.000 und 500.000 g/mol, bevorzugt zwischen 15.000 und 400.000 g/mol (Mn, bestimmt mittels GPC in 1,2,4-Trichlorbenzol mit PS-Eichung).

Der Anteil an Ethylen in den Ethylen-α-Olefin-Copolymere liegt zwischen 5 und 97, bevorzugt zwischen 10 und 95, insbesondere zwischen 15 und 93 Gew.-%.

In einer besonderen Ausführungsform werden mittels sog. "single site catalysts" hergestellte Ethylen-α-Olefin-Copolymere eingesetzt. Weitere Einzelheiten können der US 5,272,236 entnommen werden. In diesem Fall weisen die Ethylen-α-Olefin-Copolymere eine für Polyolefine enge Molekulargewichtsverteilung kleiner 4, vorzugsweise kleiner 3,5 auf.

Als weitere Gruppe von geeigneten Kautschuken sind Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glasübergangstemperatur von mindestens 25°C, unter einem weichen Bestandteil ein Polymerisat mit einer Glasübergangstemperatur von höchstens 0°C. Diese Produkte weisen eine Struktur aus einem Kern und mindestens einer Schale auf, wobei sich die Struktur durch die Reihenfolge der Monomerenzugabe ergibt. Die weichen Bestandteile leiten sich im Allgemeinen von Butadien, Isopren, Alkylacrylaten, Alkylmethacrylaten oder Siloxanen und gegebenenfalls weiteren Comonomeren ab. Geeignete Siloxankerne können beispielsweise ausgehend von cyclischem oligomerem Octamethyltetrasiloxan oder Tetravinyltetramethyltetrasiloxan hergestellt werden. Diese können beispielsweise mit y-Mercaptopropylmethyldimethoxysilan in einer ringöffnenden kationischen Polymerisation, vorzugsweise in Gegenwart von Sulfonsäuren, zu den weichen Siloxankernen umgesetzt werden. Die Siloxane können auch vernetzt werden, indem z.B. die Polymerisationsreaktion in Gegenwart von Silanen mit hydrolysierbaren Gruppen wie Halogen oder Alkoxygruppen wie Tetraethoxysilan, Methyltrimethoxysilan oder Phenyltrimethoxysilan durchgeführt wird. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Trial-lyl(iso)cyanurat zu nennen. Die harten Bestandteile leiten sich im Allgemeinen von Styrol, alpha-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen, erfolgt hierbei vorzugsweise durch den Zusatz geeignet funktionalisierter Monomere bei der Polymerisation der letzten Schale. Geeignete funktionalisierte Monomere sind beispielsweise Maleinsäure, Maleinsäureanhydrid, Mono- oder Diester oder Maleinsäure, tertiär-Butyl-(meth)acrylat, Acrylsäure, Glycidyl(meth)acrylat und Vinyloxazolin. Der Anteil an Monomeren mit funktionellen Gruppen beträgt im Allgemeinen 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt im Allgemeinen 1 : 9 bis 9 : 1, bevorzugt 3 : 7 bis 8 : 2.

Derartige Kautschuke sind an sich bekannt und beispielsweise in der EP-A-0 208 187 beschrieben. Der Einbau von Oxazingruppen zur Funktionalisierung kann z.B. gemäß EP-A-0 791 606 erfolgen.

Eine weitere Gruppe von geeigneten Schlagzähmodifiern sind thermoplastische Polyester-Elastomere. Unter Polyester-Elastomeren werden dabei segmentierte Copolyetherester verstanden, die langkettige Segmente, die sich in der Regel von Poly-(alkylen)etherglykolen und kurzkettige Segmente, die sich von niedermolekularen Diolen und Dicarbonsäuren ableiten, enthalten. Derartige Produkte sind an sich bekannt und in der Literatur, z.B. in der US 3,651,014, beschrieben. Auch im Handel sind entsprechende Produkte unter den Bezeichnungen Hytrel TM (Du Pont), Arnitel TM (Akzo) und Pelprene TM (Toyobo Co. Ltd.) erhältlich.

Selbstverständlich können auch Mischungen verschiedener Kautschuke eingesetzt werden.

Als weitere Komponente C) können die erfindungsgemäßen thermoplastischen Formmassen übliche Verarbeitungshilfsmittel wie Stabilisatoren, Oxidationsverzögerer, weitere Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher, Flammschutzmittel enthalten.

Als Beispiele für Oxidationsverzögerer und Wärmestabilisatoren seien Phosphite und weitere Amine (z. B. TAD), Hydrochinone, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß und/oder Grafit, weiterhin organische Pigmente, wie Phthalocyanine, Chinacridone, Perylene sowie Farbstoffe, wie Nigrosin und Anthrachinone als Farbmittel zugesetzt werden.

Als Keimbildungsmittel können Natriumphenylphosphinat, Aluminiumoxid, Siliziumdioxid sowie bevorzugt Talkum eingesetzt werden.

Als Flammschutzmittel seien roter Phosphor, P- und N-haltige Flammschutzmittel sowie halogenierte FS-Mittel-Systeme und deren Synergisten genannt.

Bevorzugte Stabilisatoren sind aromatische sekundäre Amine in Mengen bis zu 2, vorzugsweise 0,5 bis 1,5 und insbesondere 0,7 bis 1 Gew.-%, gemäß der allgemeinen Formel I: 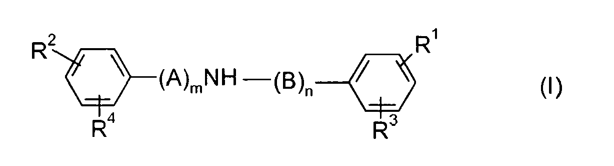 wobei
- m,n =: 0 oder 1 ,
- A und B =: durch C₁-C₄-Alkyl oder Phenyl substituiertes tertiäres C-Atom,
- R¹, R² =: Wasserstoff oder eine C₁-C₆-Alkylgruppe in ortho- oder para-Stellung, wel- cher gegebenenfalls substituiert sein kann durch 1 bis 3 Phenylreste, Halo- gen, Carboxylgruppe oder ein Übergangsmetallsalz dieser Carboxylgruppe, und
- R³, R⁴ =: Wasserstoff oder ein Methylrest in ortho- oder para-Position, wenn m plus n für 1 steht oder eine tertiäre C₃-C₉-Alkylgruppe in ortho- oder Para-Position, welche gegebenenfalls durch 1 bis 3 Phenylreste substituiert sein kann, wenn m plus n für 0 oder 1 steht,
bedeuten.

Bevorzugte Reste A oder B sind symmetrisch substituierte tertiäre Kohlenstoffatome, wobei dimethylsubstituierter tertiärer Kohlenstoff besonders bevorzugt ist. Ebenso bevorzugt sind tertiäre Kohlenstoffe, welche 1 bis 3 Phenylgruppen als Substituenten aufweisen.

Bevorzugte Reste R¹ oder R² sind para t-butyl oder tetramethylsubstituiertes n-Butyl, wobei die Methylgruppen vorzugsweise durch 1 bis 3 Phenylgruppen ersetzt sein können. Bevorzugte Halogene sind Chlor und Brom. Übergangsmetalle sind beispielsweise - welche mit R¹ oder R² = Carboxyl Übergangsmetallsalze bilden können.

Bevorzugte Reste R³ oder R⁴ sind für m plus n = 2 Wasserstoff, sowie für m plus n = 0 oder 1 ein t-Butylrest in ortho- oder para-Position, welcher insbesondere durch 1 bis 3 Phenylreste substituiert sein kann.

Beispiele für sekundäre aromatische Amine D) sind
4,4`-Bis(α,α.'- tertiäroctyl)diphenylamin
4,4'Bis(α,α-dimethylbenzyl)diphenylamin
4,4'-Bis(α-methylbenzhydryl)diphenylamin
4-(1,1,3,3-Tetramethylbutyl)4'-triphenylmethyldiphenylamin
4,4'-Bis(α,α-p-trimethylbenzyl)diphenylamin
2,4,4'-Tris(α,α-dimethylbenzyl)diphenylamin
2,2'-Dibromo,4,4'- bis(α,α-dimethyl benzyl)diphenylamin
4,4'-Bis(α,α-dimethylbenzyl)-2-carboxydiphenylamini-nickel-4,4'-bis(α,α-dimethylbenzyl)-diphenylamin
2-sec-Butyl-4,4'-bis(α,α-dimethylbenzyl)diphenylamin
4,4`-Bis(α,α-dimethylbenzyl)-2-(α-methlheptyl)diphenylamin
2-(α-Methylpentyl)4,4`-ditrityldiphenylamin
4-α,α-Dimethylbenzyl-4'-isopropoxydiphenylamin
2-(α-Methylheptyl)-4'-(α,α-dimethylbenzyl)diphenylamin
2-(α-Methylpentyl)-4'- trityldiphenylamin
4,4'-Bis(tertiary-butyl)diphenylamin sowie:

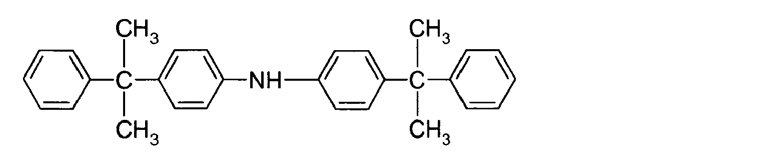

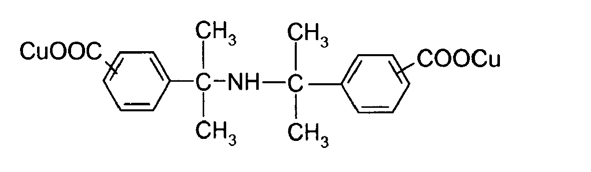

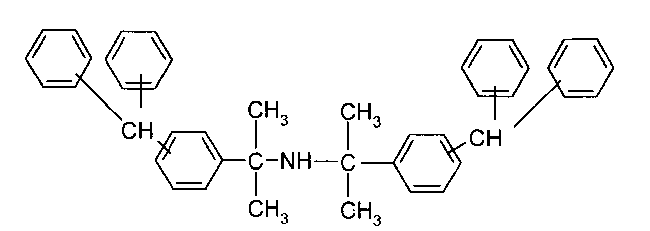

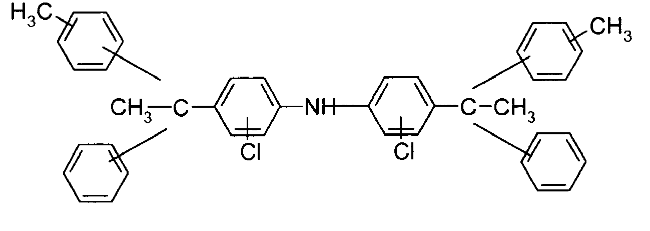

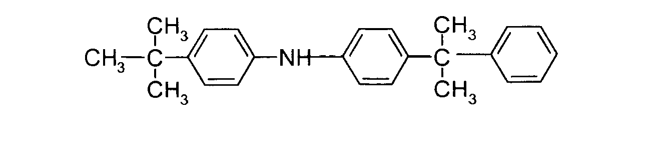

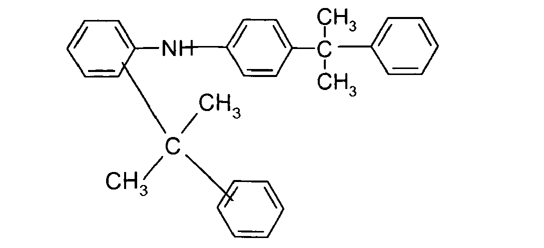

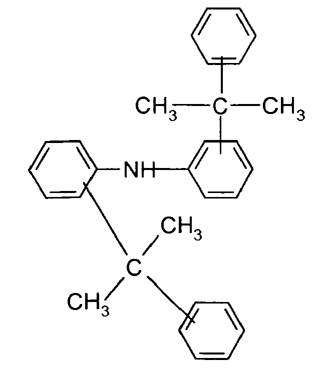

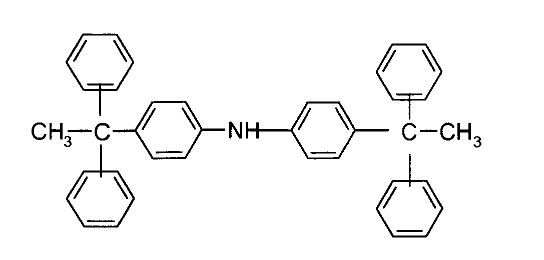

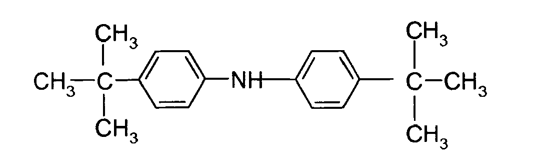

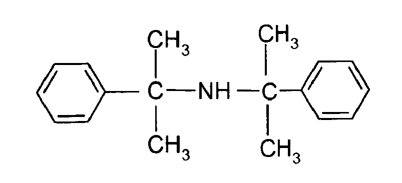

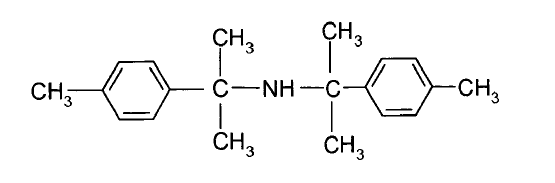

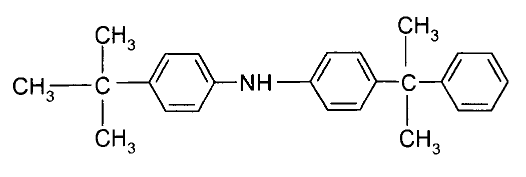

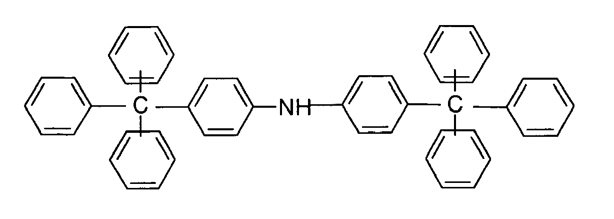

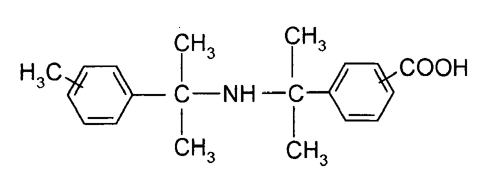

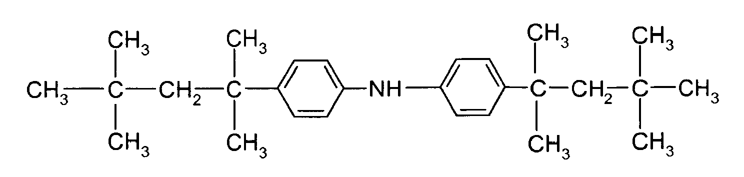

Die Herstellung erfolgt gemäß den in der BE-A 67/05 00 120 und CA-A 9 63 594 beschriebenen Verfahren. Bevorzugte sekundäre aromatische Amine sind Diphenylamin und dessen Derivate, welche als Naugard® (Firma Chemtura) im Handel erhältlich sind. Diese sind in Kombination mit bis zu 2000, vorzugsweise 100 bis 2000, bevorzugt 200 bis 500 und insbesondere 200 bis 400 ppm mindestens einer phosphorhaltigen anorganischen Säure oder deren Derivate bevorzugt.

Bevorzugte Säuren sind hypophosphorige Säure, phosphorige Säure oder Phosphorsäure sowie deren Salze mit Alkalimetallen, wobei Natrium und Kalium besonders bevorzugt sind. Bevorzugte Mischungen sind insbesondere hypophosphorige und phosphorige Säure bzw. deren Alkalimetallsalze im Verhältnis 3:1 bis 1:3. Unter organischen Derivaten dieser Säuren sollen vorzugsweise Esterderivate oben genannter Säuren verstanden werden.

Die erfindungsgemäßen thermoplastischen Formmassen können nach an sich bekannten Verfahren hergestellt werden, in dem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 320°C.

Nach einer weiteren bevorzugten Arbeitsweise können die Komponenten B) sowie gegebenenfalls C) mit einem Präpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

Die erfindungsgemäßen thermoplastischen Formmassen zeichnen sich durch gute Mechanik sowie Wärmestabilität und eine gute Verarbeitbarkeit/Fließfähigkeit sowie thermische Stabilität und Bindenahtfestigkeit (Vibrationsschweißen) aus.

Diese eignen sich zur Herstellung von Fasern, Folien und Formkörpern jeglicher Art. Nachfolgend sind einige bevorzugte Beispiele genannt:
Haushaltsartikel, elektronische Bauteile, medizinische Geräte, Kfz-Bauteile, Gehäuse von Elektrogeräten, Gehäuse von Elektronik-Komponenten im Kfz, Kotflügel, Türbeplankung, Heckklappen, Spoiler, Ansaugrohre, Wasserkästen, Gehäuse von Elektrowerkzeugen.

### Beispiele 1 V bis 4

Es wurden folgende Komponenten verwendet:

### Komponente A/1:

Polyamid 6 mit einer Viskositätszahl VZ von 180 ml/g, gemessen als 0,5 gew.-%ige Lösung in 96 gew.-%iger Schwefelsäure bei 25°C nach ISO 307. (Es wurde Ultramid® B32 E der BASF AG verwendet).

### Herstellung der Komponente B/1 und B/2 sowie B/3:

In einem Vierhalskolben, ausgestattet mit Rührer, Destillationsbrücke, Gaseinleitrohr und Innenthermometer, wurden 2000g Triethanolamin (TEA) oder Triisopropanolamin (TIPA) sowie 13,5 g 50%ige wässrige unterphosphorige Säure vorgelegt und das Gemisch auf 230°C erwärmt. Bei ca. 220°C setzte langsam die Bildung von Kondensat ein. Das Reaktionsgemisch wurde bei 230°C über die in Tabelle 1 angegebene Zeit gerührt, wobei das bei der Reaktion entstandene Kondensat mittels mäßigen Stickstoffstroms als Strippgas über die Destillationsbrücke entfernt wurde. Gegen Ende der angegebenen Reaktionszeit wurde bei einem Unterdruck von 500mbar restliches Kondensat entfernt. Nach Ablauf der in Tabelle 1 angegebenen Zeit wurde der Ansatz auf 140°C abgekühlt und der Druck langsam und stufenweise auf 100mbar verringert um noch verbliebene flüchtigen Anteile zu entfernen.

Das Produktgemisch wurde anschließend auf Raumtemperatur abgekühlt und analysiert.

### Analytik der erfindungsgemäß zu verwendenden Produkte:

Die Polyetheramin-Polyole wurden per Gelpermeationschromatographie mit einem Refraktometer als Detektor analysiert. Als mobile Phase wurde Hexafluorisopropanol (HFIP) verwendet, als Standard zur Bestimmung des Molekulargewichts wurde Polymethylmethacrylat (PMMA) eingesetzt.

Die Bestimmung der OH-Zahl erfolgte gemäß DIN 53240, Teil 2.

**Tabelle 1: Einsatzstoffe und Endprodukte**

| Komp. Nr. | Amin | Reaktions-dauer (h) | Molekular-gewicht GPC (g/mol) Mn Mw | OH- Zahl (mg KOH/g) |
|---|---|---|---|---|
| B/1 | TEA | 4 | 4500/14100 | 460 |
| B/2 | TIPA | 4 | 6100/10300 | 400 |
| B/3 | TIPA | 4 | 7200/11900 | 274 |

### Komponente C/1:

Polyethylenimin (PEI) mit einem Mw von 1300 g/mol (GPC), es wurde Lupasol® G 20 der BASF AG eingesetzt.

### Komponente C/2:

Glasfasern mit einer mittleren Dicke von 10 µm.

### Komponente C/3:

Calciumstearat

### Komponente C/4:

Cul/KJ im Verhältnis 1:4

### Komponente C/5:

Polyethylenbatch mit 30 % Ruß.

### Herstellung der Formmassen

Die Komponenten A) bis C) wurden auf einem Zweischneckenextruder bei 280°C abgemischt und in ein Wasserbad extrudiert. Nach Granulierung und Trocknung wurden auf einer Spritzgussmaschine Prüfkörper gespritzt und geprüft. (280°C/80°C).

Der MVR wurde gemäß ISO 1133 bestimmt, bei 270C/5kg Belastung,

Charpy-Schlagzähigkeit gekerbt gemäß ISO 179-2/1 eA bei 23°C; ungekerbt bei -30°C gemäß ISO 179-2/1 eU

Zugeigenschaften gemäß ISO 527-2.

E-Modul gemäß ISO 527-2

Die Spirallänge wurde mit Fließspirale 1,5 mm bei 280°C bestimmt.

Die Ergebnisse der Messungen und die Zusammensetzungen der Formmassen sind der Tabelle 2 zu entnehmen.

**Tabelle 2:**

| Komponenten [Gew.-%] | | 1V | 2V | 3 | 4 |
|---|---|---|---|---|---|
| A1 | | 67,40 | 66,40 | 66,90 | 66,40 |
| B/1 | | - | - | 1,0 | 0,50 |
| C/1 | | - | 1,0 | - | 0,50 |
| C/2 | | 30 | 30 | 30 | 30 |
| C/3 | | 0,20 | 0,20 | 0,20 | 0,20 |
| C/4 | | 0,70 | 0,70 | 0,70 | 0,70 |
| C/5 | | 1,70 | 1,70 | 1,70 | 1,70 |
| Spirallänge (280/1,5 mm) | cm | 32,1 | 44,1 | 39,1 | 45,9 |
| Spirallänge | % | - | 37 | 21 | 42 |
| VZ | ml/g | 137 | 119 | 134 | 118 |
| Charpy ungekerbt (23°C) | kJ/m² | 81 | 69 | 77 | 69 |
| E-Modul | MPa | 9890 | 9631 | 10016 | 9455 |
| Streckspannung | MPa | 161,3 | 157 | 168 | 157 |
| Bruchspannung | % | 3,2 | 2,8 | 3 | 2,9 |
| MVR (275/5) | ml/10 min | 35,5 | 72,2 | 43,9 | 85,4 |

### Beispiele 5V - 13

### Komponente A/2:

Als Komponente A/2 wurde ein teilaromatisches Copolyamid 6/6T (Verhältnis 30:70) eingesetzt mit einer VZ von 130 ml/g gemäß ISO 307.

### Komponente A/3:

PA 6 mit einer VZ von 150 ml/g.

Komponenten B/1, C/2, C/3, C/5 entsprachen den Beispielen 1V - 4.

### Komponente C/6:

Fusabond® N NM493D der Firma DuPont, Ethylen-Octen-Copolymer mit Maleinsäureanhydrid funktionalisiert, MFR 1,5 g/10' (D1238, 190°C/2,16 kg).

### Komponente C/7:

Leitruß Ensaco 250 der Fa. Timcal, charakterisiert durch eine Porosität von 170 kg/m³, bestimmt nach ASTM D1539-99.

### Komponente C/8:

Naugard^{®}445
4,4'-Bis(alpha, alpha-dimethylbenzyl)diphenylamin
CAS Number: 10081-67-1

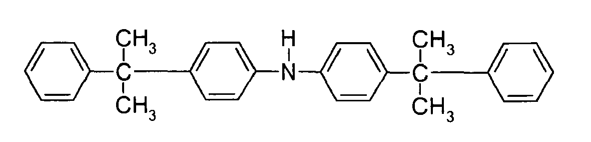

### Komponente C/9:

Na-Hypophosphit

### Komponente C/10:

Ca-Montanat

### Komponente C/11:

20 %iger Nigrosinbatch in Polyamid 6

### Herstellung der Produkte

Die Komponenten wurden in einem Zweiwellenextruder bei einer Massetemperatur von 300 bis 330°C gemischt. Die Schmelze wurde durch ein Wasserbad geleitet und granuliert.

Die Probekörper wurden bei einer Massetemperatur von 330°C und einer Werkzeugtemperatur von 100°C hergestellt.

Zur Prüfung der Bindenahtfestigkeit wurden ein Zugversuch (ISO 527-2) und ein Biegeversuch nach Vibrationsschweißen durchgeführt und nach 300 h Wärmelagerung bei 180°C:

| Probekörper | |
|---|---|
| Werkzeug | Platten P10/4,0 (110 mm x 110 mm x 4 mm) |
| Fügefläche | 440 mm² |
| Konditionierung vor | |
| Schweißen | - Trocknen: 80°C/24 h, Vakuum |
| Prüfung | - Trocknen: 80°C/24 h, Vakuum |

| Schweißversuche | |
|---|---|
| Schweißung | linear, Stumpfstoß, typgleich |
| Schweißdruck | 1,6 |
| Amplitude | 0,9 mm |
| Schweißweg | 1,5 mm |
| Schweißung pro Einstellung | 8 |

| Maschinendaten | |
|---|---|
| Vibrationsschweißmaschine | Branson (Typ M-102 H) |
| Schweißfrequenz | ca. 240 Hz |
| Schweißung | linear |
| Schweißdruck | ca. 1,6 MPa |
| Amplitude | 0,9 mm |

Die Ergebnisse der Prüfungen und Zusammensetzungen der Formmassen sind in der Tabelle 3 aufgeführt.

**Tabelle 3:**

| Komp. [Gew.-%] | 5V | 6 | 7 | 8V | 9 | 10 | 11 V | 12 | 13 |
|---|---|---|---|---|---|---|---|---|---|
| A/2 | 93,68 | 92,68 | 93,18 | 59,38 | 58,38 | 58,88 | | | |
| A/3 | - | - | - | - | - | - | 67,65 | 66,65 | 66,65 |
| B/1 | 1,0 | 0,5 | - | - | - | | - | 1,0 | - |
| B/2 | | | | - | 1,0 | 0,5 | - | - | 1,0 |
| C/2 | | | | 35,0 | 35,0 | 35,0 | 30 | 30 | 30 |
| C/3 | 0,3 | 0,3 | 0,3 | 0,3 | 0,3 | 0,3 | 0,7 C/4 | 0,7 C/4 | 0,7 C/4 |
| C/6 | 4,0 | 4,0 | 4,0 | 4,0 | 4,0 | 4,0 | | | |
| C/7 | 1,0 | 1,0 | 1,0 | 0,65 | 0,65 | 0,65 | | | |
| C/8 | 1,0 | 1,0 | 1,0 | 0,65 | 0,65 | 0,65 | | | |
| C/9 | 0,025 | 0,025 | 0,025 | 0,017 | 0,017 | 0,017 | | | |
| C/10 | | | | | | | 0,2 | 0,2 | 0,2 |
| C/11 | | | | | | | 0,75 | 0,75 | 0,75 |
| Zug-E-Modul [MPa] | 3107 | 3167 | 3177 | 11491 | 11592 | 11294 | 9800 | 9730 | 9870 |
| Streckspannung [MPa] | 96 | | 96 (1 Stab) | | | | 184 | 180 | 187 |
| Bruchspannung [MPa] | 61 | 78 | 85 | 187 | 187 | 186 | 4 | 3 | 3 |
| Streckdehnung [%] | 5,0 | | 4,9 (1 Stab) | 2,6 | 2,3 | 2,6 | 180,0 | 180,0 | 186 |
| Bruchdehnung [%] | 3,6 (1 Stab) | 2,9 | 3,5 (9 Stäbe) | | | | 3,8 | 3,2 | 3,3 |
| Charpy Kerbschlagzähigk. [kJ/m²] | 10 | 7,6 | 8,6 | | | | 18 | 13,9 | 15,7 |
| Charpy Schlagzähigk. | | | | 86 | 82 | 82 | 108 | 93 | 99 |
| Verarbeitung | | | | | | | | | |
| Feuchte [%] | 0,015 | 0,006 | 0,006 | 0,002 | 0,004 | 0,005 | | | |
| Fließweg T7 1,5 mm MT: 320°C WT: 80°C | 23,5 | 30,0 | 25,0 | 21,5 | 28,0 | 23,5 | 32,0 | 36,0 | 34,0 |
| Fließweg T7 2 mm MT: 320°C WT: 80°C [cm] | 32,7 | 45,1-46,4 | 35,2 | 30,0 | 36,0 | 31,0 | | | |
| Zugversuch nach Schweißen [MPa] | | | | | | | 89 | 78 | 84 |
| Zugversuch nach 300 h 180°C [MPa] | | | | | | | 48 | 56 | 53 |
| Biegeversuch nach Schweißen [MPa] | | | | | | | 175,0 | 138,0 | 164,0 |
| Biegeversuch nach 300 h 180°C [MPa] | | | | | | | 118,0 | 104,0 | 142,0 |

### Beispiele 14V bis 16

Die Komponente A entsprach A/2 der Beispiele 5V - 13

### Komponente B/3:

Siehe Tabelle 1

### Komponente C/12:

Tafmer® MH 7010: Ethylen-Buten-Copolymer mit 0,4 Gew.-% Acrylsäure funktionalisiert

### Komponente C/13:

Hyperverzweigtes Polycarbonat gemäß Vorschrift und Tabelle 1 der DE-A 10 2005 033 147.

### Komponente C/14:

Talkum IT-Extra der Fa. Omya

Die Komponenten C/3, C/7, C/8, C/9, entsprachen den vorstehenden Beispielen

### Komponente C/15:

Loxiol® VPG 861 der Firma Cognis: Pentaerythrittetrastearat.

### Herstellung der Produkte

Die Komponenten wurden in einem Zweiwellenextruder bei einer Massetemperatur von 300 bis 330°C gemischt. Die Schmelze wurde durch ein Wasserbad geleitet und granuliert.

Die Probekörper wurden bei einer Massetemperatur von 330°C und einer Werkzeugtemperatur von 100°C hergestellt.

Die Viskositätszahl der Polyamide wurde nach DIN 53 727 an 0,5 gew.-%igen Lösungen in 96 Gew.-% Schwefelsäure gemessen.

Die Wärmeformbeständigkeit der Proben wurde nach ISO 75 (HDT B) ermittelt (Belastung 0,45 MPa, Temperatursteigerung von 50 k je Stunde an ISO-Stäben). Die Kerbschlagzähigkeit der Produkte wurde nach ISO 179 1 eA bestimmt. Die Duktilität der Produkte wurde anhand des Durchstoßversuchs nach ISO 6603 charakterisiert. Die Prüfung wurde an Platten der Dicke 60*60*3 mm durchgeführt.

Die Fließfähigkeit wurde durch Messung der Schmelzeviskosität im Kapillarrheometer bei 340°C bestimmt. In der Tabelle aufgeführt sind die bei einer Scherrate von 10² 10³ und 10⁴ Hz bestimmten Werte.

Die Zusammensetzungen der Formmassen und die Ergebnisse der Messungen sind Tabelle 4 zu entnehmen.

**Tabelle 4:**

| Formmasse | 14V | 15V | 16 |
|---|---|---|---|
| A/2 | 70,9 | 70,5 | 70,4 |
| B/3 | - | - | 0,5 |
| C/3 | 0,3 | 0,3 | 0,3 |
| C/7 | 1 | 1 | 1 |
| C/8 | 0,78 | 0,78 | 0,78 |
| C/9 | 0,02 | 0,02 | 0,02 |
| C/12 | 16 | 16 | 16 |
| C/13 | - | 0,5 | - |
| C/14 | 10,5 | 10,4 | 10,5 |
| C/15 | 0,5 | 0,5 | 0,5 |
| HDT B [°C] | 152 | 159 | 167 |
| ak, RT [kJ/m²] | 11,9 | 12,5 | 13,9 |
| Ws, -30°C [Nm] | 66 | 71 | 73 |
| Viskosität bei 340°C [Pa*s] | | | |
| 10² Hz | 401 | 386 | 312 |
| 10³ HZ | 167 | 132 | 110 |
| 10⁴ Hz | 42 | 37 | 31 |

## Patentansprüche

1. Thermoplastische Formmassen, enthaltend
A) 10 bis 99 Gew.-% mindestens eines thermoplastischen Polyamides
B) 0,01 bis 30 Gew.-% mindestens eines hoch- oder hyperverzweigten Polyetheramins,
C) 0 bis 70 Gew.-% weiterer Zusatzstoffe,
wobei die Summe der Gewichtsprozente der Komponenten A) bis C) 100 % ergibt.

2. Thermoplastische Formmassen nach Anspruch 1, wobei die Komponente B) eine Glasübergangstemperatur von weniger als 50°C aufweist.

3. Thermoplastische Formmassen nach den Ansprüchen 1 oder 2, wobei die Komponente B) eine OH-Zahl von 100 bis 900 mg KOH/g aufweist.

4. Thermoplastische Formmassen nach den Ansprüchen 1 bis 3, enthaltend als Komponente C) 0,01 bis 30 Gew.-% eines Polyethylenimin-Homopolymerisates oder -copolymerisates.

5. Thermoplastische Formmassen nach den Ansprüchen 1 bis 4, wobei die Komponente B) im Mittel mindestens 3 weitere funktionelle OH-Gruppen aufweist, neben den Ether- und den Aminogruppen, die das Polymergerüst bilden.

6. Thermoplastische Formmassen nach den Ansprüchen 1 bis 5, wobei die Komponente B) erhältlich ist durch Umsetzung von mindestens einem Trialkanolamin mit gegebenenfalls Dialkanolaminen oder gegebenenfalls mit Di- oder höherfunktionellen Polyetherolen.

7. Thermoplastische Formmassen nach den Ansprüchen 1 bis 6,in denen die Komponente B) erhältlich ist durch intermolekulare Polykondensation von mindestens einem Trialkanolamin der allgemeinen Formel 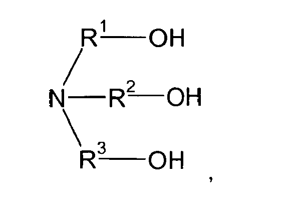 in der die Reste R¹ bis R³ unabhängig voneinander für gleiche oder unterschiedliche Alkylengruppen mit 2 bis 10 C-Atomen stehen.

8. Verwendung von hoch- oder hyperverzweigten Polyetheraminen B) zur Verbesserung der Fließfähigkeit und/oder Wärmestabilität von Polyamiden A).

9. Verwendung der thermoplastischen Formmassen gemäß den Ansprüchen 1 bis 7 zur Herstellung von Fasern, Folien und Formkörpern jeglicher Art.

10. Fasern, Folien und Formkörper, erhältlich aus den thermoplastischen Formkörpern gemäß den Ansprüchen 1 bis 7.

## Claims

1. A thermoplastic molding composition comprising
A) from 10 to 99% by weight of at least one thermoplastic polyamide
B) from 0.01 to 30% by weight of at least one highly branched or hyperbranched polyetheramine,
C) from 0 to 70% by weight of further added materials,
where the total of the percentages by weight of components A) to C) is 100%.

2. The thermoplastic molding composition according to claim 1, where component B) has a glass transition temperature below 50°C.

3. The thermoplastic molding composition according to claim 1 or 2, where component B) has an OH number of from 100 to 900 mg KOH/g.

4. The thermoplastic molding composition according to claims 1 to 3, comprising, as component C), from 0.01 to 30% by weight of a polyethyleneimine homo- or copolymer.

5. The thermoplastic molding composition according to claims 1 to 4, where component B) has an average of at least 3 further functional OH groups, alongside the ether groups and the amino groups which form the main structure of the polymer.

6. The thermoplastic molding composition according to claims 1 to 5, where component B) is obtainable via reaction of at least one trialkanolamine optionally with dialkanolamines or optionally with polyetherols whose functionality is two or higher.

7. The thermoplastic molding composition according to claims 1 to 6, in which component B) is obtainable via intermolecular polycondensation of at least one trialkanolamine of the general formula 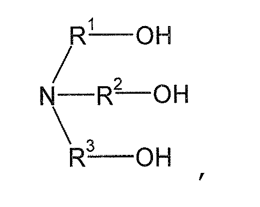 in which the radicals R¹ to R³. independently of one another, are identical or different alkylene groups having from 2 to 10 carbon atoms.

8. The use of highly branched or hyperbranched polyetheramines B) for improving the flowability and/or thermal stability of polyamides A).

9. The use of the thermoplastic molding composition according to claims 1 to 7 for the production of fibers, of foils, or of moldings of any type.

10. A fiber, a foil or a molding, obtainable from the thermoplastic moldings according to claims 1 to 7.

## Revendications

1. Masses de moulage thermoplastiques, contenant
A) 10 à 99% en poids d'au moins un polyamide thermoplastique,
B) 0,01 à 30% en poids d`au moins une polyétheramine hautement ramifiée ou hyperramifiée,
C) 0 à 70% en poids d'autres additifs,
la somme des pour cent en poids des composants A) à C) valant de 100%.

2. Masses de moulage thermoplastiques selon la revendication 1, le composant B) présentant une température de transition vitreuse inférieure à 50°C.

3. Masses de moulage thermoplastiques selon les revendications 1 ou 2, le composant B) présentant un indice d'OH de 100 à 900 mg de KOH/g.

4. Masses de moulage thermoplastiques selon les revendications 1 à 3, contenant comme composant C) 0,01 à 30% en poids d'un homopolymère ou d'un copolymère de polyéthylène-imine.

5. Masses de moulage thermoplastiques selon les revendications 1 à 4, le composant B) présentant en moyenne au moins 3 autres groupes OH fonctionnels, en plus des groupes éther et amino, qui forment la structure du polymère.

6. Masses de moulage thermoplastiques selon les revendications 1 à 5, le composant B) pouvant être obtenu par transformation d'au moins une trialcanolamine avec le cas échéant des dialcanolamines ou le cas échéant des polyétherols difonctionnels ou à fonctionnalité supérieure.

7. Masses de moulage thermoplastique selon les revendications 1 à 6, dans lesquelles le composant B) peut être obtenu par polycondensation intermoléculaire d'au moins une trialcanolamine de formule générale 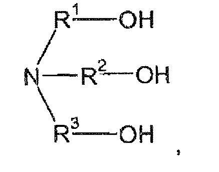 dans laquelle les radicaux R¹ à R³ représentent, indépendamment l'un de l'autre, des groupes alkylène identiques ou différents comprenant 2 à 10 atomes de carbone.

8. Utilisation de polyétheramines B) hautement ramifiées ou hyperramifiées pour améliorer l'aptitude à l'écoulement et/ou la stabilité thermique de polyamides A).

9. Utilisation des masses de moulage thermoplastiques selon les revendications 1 à 7 pour la fabrication de fibres, de feuilles et de corps moulés de tous types.

10. Fibres, feuilles et corps moulés de tous types pouvant être obtenus à partir des corps moulés thermoplastiques selon les revendications 1 à 7.
